# EUROPEAN PATENT SPECIFICATION

(11) **EP 4 067 268 B1**
(45) Date of publication and mention of the grant of the patent: **05.03.2025**
(21) Application number: 22163643.4
(22) Date of filing: 22.03.2022
(51) Int. Cl.: B65G 39/16, B24B 21/00, B24B 7/06, B65G 15/64

(54) **MACHINE WITH IMPROVED TRANSPORT SYSTEM**
MASCHINE MIT VERBESSERTEM TRANSPORTSYSTEM
MACHINE AVEC SYSTÈME DE TRANSPORT AMÉLIORÉ

(30) Priority: 25.03.2021 IT 202100007355
(43) Date of publication of application: 05.10.2022
(73) Proprietor: SCM Group S.p.A., 47921 Rimini (RN) (IT)
(72) Inventor: VENTURINI, Marco, 47921 RIMINI (IT)
(74) Representative: Tiburzi, Andrea

(56) References cited:
- EP-A1- 3 795 295
- CN-U- 202 063 530
- GB-A- 2 206 553
- US-A- 4 959 040
- US-A1- 2003 136 646
- US-A1- 2003 199 349

## Description

The present invention relates to a machine with an improved transport system.

Specifically, the invention relates to a machine equipped with at least one conveyor belt for transporting the pieces to be machined and configured to perform at least one machining operation on such pieces during the relative transport.

The invention, therefore, falls within the field of the so-called "passage machines", i.e. machines configured to perform the operations and/or machining provided on moving parts.

There are several passage machines in which the workpieces are transported by conveyor belts.

However, in many cases these known machines show the disadvantage of not being able to reach high levels of precision in the machined pieces.

This machining inaccuracy is normally due not so much to the operating means of the machine, but rather to the intrinsic imperfections of the conveyor belts, which due to their very nature have uncontrolled oscillations and movements during their operation.

This means that the pieces transported by traditional conveyor belts are not, in many cases, in the relative theoretical position (i.e. ideal machining position), and therefore that the operating means do not operate in the exact areas of the pieces.

"The relevant prior art also comprises the patent applications GB 2206553, US 2003136646, CN 202063530, EP 3795295, US 2003199349, and US 4959040". GB2206553 discloses a machine for executing at least one operation or machining operation on at least one panel or other piece, said machine comprising: - a conveyor belt for conveying at least one panel or other piece according to an advancing direction; at least one side edge being defined in said conveyor belt; - transversal movement means for moving said conveyor belt transversely to said advancing direction; - detecting means for detecting at least the position of said at least one side edge of said conveyor belt; - straightening means for straightening said at least one side edge of said conveyor belt; - operative meansfor executing at least one operation or machining operation on at least one panel or other piece while said at least one panel or other piece is transported by said conveyor belt; and - a control unit which is operatively connected with said transversal movement means and said detecting means and configured to command said transversal movement means to move said conveyor belt transversely to said advancing direction based on the position of said at least one side edge being straightened by said straightening means, said position being detected by said detecting means.

For this reason, traditional machines of the aforesaid type are therefore not suitable for cases where particularly reduced machining tolerances are required.

In the following, the description will be directed to a machine for machining panels, but it is clear that it should not be considered limited to this specific use, as it can be also extended to machines for the execution of various operations and/or machining on pieces of any shape and nature.

In the light of the above, it is, therefore, an object of the present invention to provide a machine with an improved transport system, which allows one or more machining and/or operations to be carried out in a precise manner on pieces of different types, including pieces of high length.

Another object of the invention is to provide a machine with an improved transport system, which allows obtaining machined parts with a high level of precision.

A further object of the present invention is to provide a machine with an improved transport system, which allows a high level of productivity to be achieved.

It is, therefore, specific object of the present invention a machine for executing at least one operation or machining operation on at least one panel or other piece, said machine comprising: a conveyor belt for conveying at least one panel or other piece according to an advancing direction; at least one side edge being defined in said conveyor belt; transversal movement means for moving said conveyor belt transversely to said advancing direction; detecting means for detecting at least the position of said at least one side edge of said conveyor belt; grinding means for grinding said at least one side edge of said conveyor belt; operative means for executing at least one operation or machining operation on at least one panel or other piece while said at least one panel or other piece is transported by said conveyor belt; and a control unit which is operatively connected with said transversal movement means and said detecting means and configured to command said transversal movement means to move said conveyor belt transversely to said advancing direction based on the position of said at least one side edge being grinded by said grinding means, said position being detected by said detecting means.

Preferably according to the invention, said detecting means are configured to detect also the shape of said at least one side edge of said conveyor belt.

Conveniently according to the invention, said detecting means may comprise a feeler device.

Preferably according to the invention, said detecting means are placed in a fixed position relative to said conveyor belt.

Advantageously according to the invention, said grinding means may be of a rotative type.

Further according to the invention, said grinding means may comprise a milling cutter.

Conveniently according to the invention, said detecting means and said grinding means may be placed at the same branch of said conveyor belt.

Preferably according to the invention, said at least one side edge of said conveyor belt may lie, substantially, on a predetermined plane which is substantially parallel to said advancing direction and substantially orthogonal to the plane on which said at least one panel or other piece lies when said at least one panel or other piece is transported by said conveyor belt.

Still according to the invention, said operative means may comprise at least one sanding member.

Further according to the invention, said transversal movement means may comprise a predetermined roller, on which said conveyor belt is at least partially wound, and actuating means for activating said predetermined roller.

Advantageously according to the invention, said actuating means may be configured to rotate said predetermined roller on a plane which is parallel to the transporting plane defined by said conveyor belt.

Further according to the invention, said conveyor belt may be wound between a first roller and a second roller which are placed at opposite ends of said conveyor belt, and in that said predetermined roller coincides with said first roller or said second roller.

It is further object of the present invention a method for processing at least one panel or other piece by a machine as indicated above while said conveyor belt transports said at least one panel or other piece, said method comprising the steps of: placing at least one panel or other piece on said conveyor belt and making said conveyor belt advance according to said advancing direction; grinding said at least one side edge of said conveyor belt by said grinding means; detecting, by said detecting means, at least the position of said at least one side edge of said conveyor belt which is grinded by said grinding means; moving said conveyor belt transversely to said advancing direction by said transversal movement means based on the position of said at least one side edge of said conveyor belt which is grinded by said grinding means, the position being detected by said detecting means; and executing, by said operative means, at least one operation or machining operation on said at least one panel or other piece while said at least one panel or other piece is transported by said conveyor belt.

Preferably according to the invention, said method comprises also the step of detecting the shape and position of said at least one side edge of said conveyor belt before executing said step of grinding said at least one side edge of said conveyor belt; and said step of grinding said at least one side edge of said conveyor belt is executed based on said shape and said position of said at least one side edge of said conveyor belt, which are detected before said step of grinding.

The present invention will be now described, for illustrative but not limitative purposes, according to its preferred embodiments, with particular reference to the figures of the enclosed drawings, wherein:

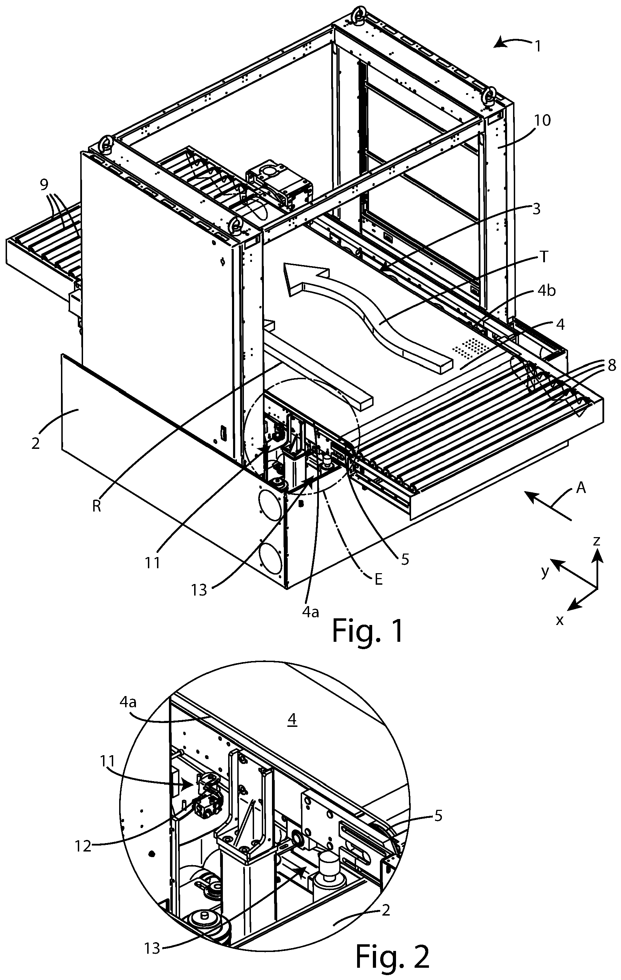

figure 1 is a first axonometric view, from the top, of a machine according to the present invention;
figure 2 is a detail view of the detail E indicated in figure 1;

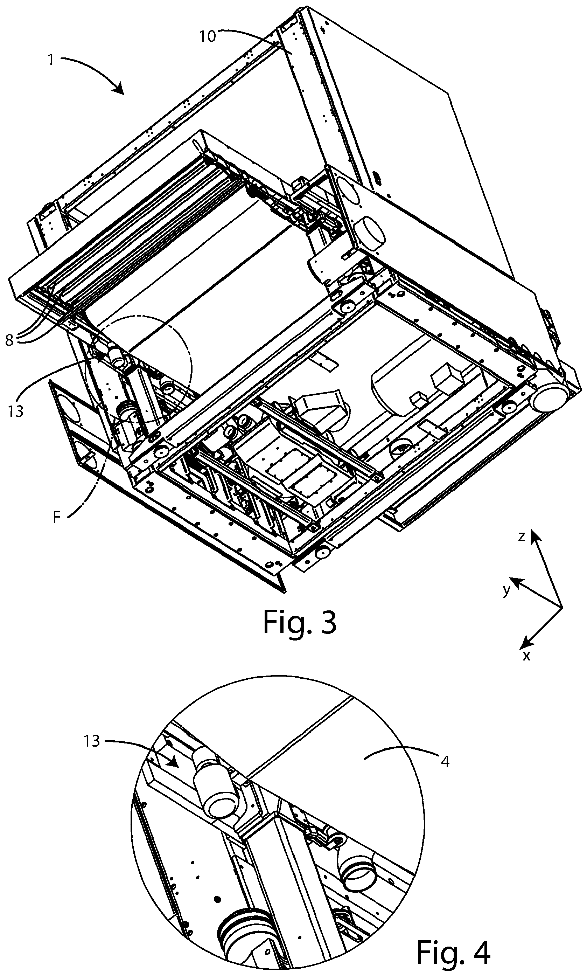

figure 3 is a second axonometric view, from the bottom, of the machine shown in figure 1;
figure 4 is a detail view of the detail F indicated in figure 3;

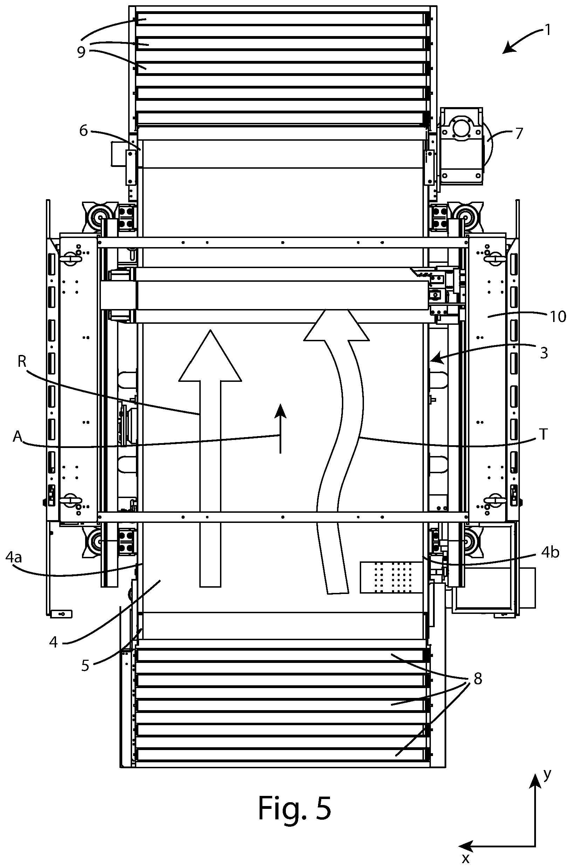

figure 5 is a top plan view of the machine illustrated in figures 1 and 3; and

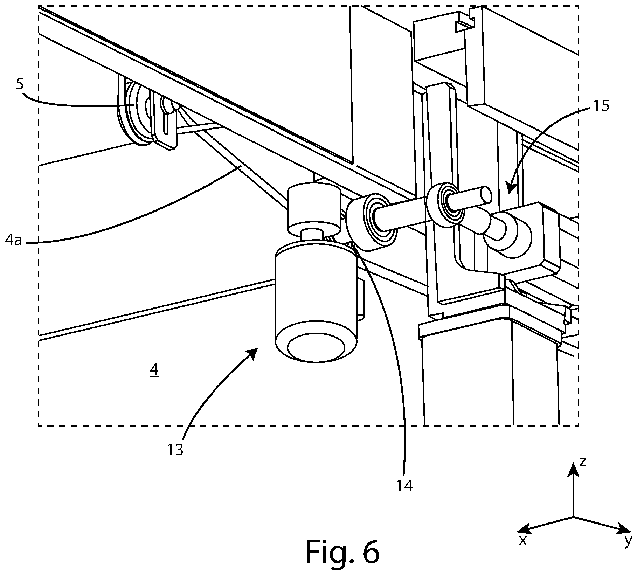

figure 6 is a further detail view of the machine shown in figure 1.

In the various figures the similar parts will be indicated with the same numerical references.

With reference to the attached figures, 1 indicates as a whole a machine for carrying out at least one machining and/or operation on panels or pieces of other shapes.

The machine 1 comprises a base 2, on which a conveyor belt 3 is provided for transporting panels or pieces of another type according to an advancement direction A on a XY plane formed by a first axis X and a second axis Y.

The conveyor belt 3 comprises, in turn, a flexible belt 4 of tubular shape, i.e. having a closed profile, delimited by a first side edge 4a and a second side edge 4b, which are mutually opposite.

The aforementioned flexible belt 4 is wound on a driven roller 5 and a driving roller 6, connected to a motor 7 to allow it to rotate around its axis.

In the machine 1, movement means are also provided for moving the flexible belt 4 of the conveyor belt 3 on the XY plane, orthogonally to the advancement direction A.

Such movement means can comprise, for example, an intermediate roller 14 arranged between the driven roller 5 and the driving roller 6, parallel to these two, and a linear actuator 15, for example a pneumatic type piston-cylinder system, acting along a predetermined axis parallel to the second axis Y, for the movement of the intermediate roller 14.

The aforementioned intermediate roller 14 is arranged in contact with the flexible belt 4, in such a way as to place it under tension according to a third axis Z orthogonal to the XY plane.

Specifically, the intermediate roller 14 is hinged, at one of its ends, by means of a hinge, to a fixed part of the machine 1 at one side of the conveyor belt 3, and connected, at its other end, to said linear actuator 15, so that, when the movable part of the linear actuator 15 moves in a direction of said predetermined axis, the intermediate roller 14 rotates (i.e. inclines) around the rotation axis (parallel to the third axis Z) of said hinge in a first direction of rotation on the XY-plane, and that when the same movable part of the linear actuator 15 moves in the opposite direction of said predetermined axis, the intermediate roller 14 rotates (i.e. inclines) around the rotation axis of said hinge in a second direction of rotation, opposite to said first direction of rotation, in the XY-plane.

By operating the linear actuator 15 it is, therefore, possible obtaining a variation of the incidence angle of the intermediate roller 14 with respect to the relative contact surface of the flexible belt 4, and the consequent displacement of the latter in each of the two directions of the first axis X.

Alternatively, it is possible to provide that the same movement system, just described, of the intermediate roller 14 is applied not to the latter, but to one of the driven roller 5 and the driving roller 6; in this case, the aforementioned intermediate roller 14 would therefore not be necessary.

Therefore, in the latter case the movement of the flexible belt 4 according to the first axis X would be obtained by rotating, or by tilting, the driven roller 5 or the driving roller 6 (the one, between the two, which is connected to the aforementioned linear actuator) on the XY-plane around the rotation axis of the aforementioned hinge.

On the basis of a further variant of the movement means not shown in the figures, the transverse movement of the flexible belt 4 in the direction of the second axis Y can be obtained by means of a linear actuator (for example a pneumatic piston-cylinder system) acting along an axis substantially parallel to the first axis X on an intermediate roller arranged between the driven roller 5 or the driving roller 6, parallel to these two and having an external surface such as to create a certain degree of friction with the contact surface of the flexible belt 4.

In the latter case, by actuating the linear actuator, the translation of said intermediate roller along its axis (parallel to the first axis X) in one direction or in the opposite direction is obtained, and consequently the dragging of the flexible belt 4 along the same direction, due to the friction existing between the intermediate roller and the flexible belt 4 itself.

The machine 1 includes a control unit (not shown), which both the conveyor belt 3 and the relative motor 7, and the aforementioned handling means are operatively connected to.

Upstream the conveyor belt 3, in a coplanar position with it, there is a first conveyor roller 8, namely a first plurality of idle rollers, to allow the panels to be supported and the subsequent thrust towards the conveyor belt 3.

Similarly, downstream the conveyor belt 3, in a position coplanar with it, a second roller conveyor 9 is provided, namely a second plurality of idle rollers, to allow the reception of the panels leaving the conveyor belt 3 and their subsequent picking up.

In correspondence with the conveyor belt 3 there is a frame 10 to support the operating means (not shown) provided for carrying out one or more machining and/or operations on the panels, or other pieces, while the latter are transported by the same conveyor belt 3 according to the advancement direction A.

Said operating means can be arranged above the conveyor belt 3, or below said conveyor belt 3, providing areas for interrupting the belt 3 itself.

For greater clarity, the accompanying figures omitted to graphically represent the operating means for carrying out at least one machining and/or operation on the pieces.

In this case, these operating means could comprise for example one or more sanding tools, for example an abrasive roller, or a rotary disk, such as a sanding pad, or a brush, or a tool with cutting elements, or a laser machining unit for sanding or machining the upper surface of the panels transported by the conveyor belt 3. In any case, the aforementioned operating means could also be of another kind and allow the execution of other types of processing and/or operations, such as for example a painting operation.

The machine 1 is also equipped with a feeler device 11 mounted, in a fixed position, in correspondence with the first lateral edge 4a of the conveyor belt 3, next to the lower branch of the latter.

Specifically, this feeler device 11 comprises a roller 12 that can idly rotate around its axis, substantially orthogonal to the plane on which the panels are advanced.

The feeler device 11 makes it possible to detect the exact shape and position of the first lateral edge 4a of the conveyor belt 3 by precisely probing the same first lateral edge 4a.

In particular, this detection takes place by bringing into mutual contact, by means of the aforementioned moving means, the cylindrical lateral surface of the roller 12 of the feeler device 11 and the first lateral edge 4a of the conveyor belt 3 and making the latter advance in such a way that it the same feeler device 11 can continuously detect the shape and position of said first lateral edge 4a.

The feeler device 11 is also operatively connected to the aforementioned control unit of the machine 1.

In correspondence with the first lateral edge 4a of the conveyor belt 3, next to the lower branch of the latter, there is also a grinding member 13 for carrying out the rectification of said first lateral edge 4a, giving it a rectilinear shape according to the aforesaid second axis Y.

Specifically, this rectification is performed by removing, from the first lateral edge 4a of the conveyor belt 3, the excess material in such a way as to obtain, as mentioned above, the straightness of said first lateral edge 4a.

For example, as shown in the attached figures, the grinding member 13 can be a rotary cutting member, such as a cutter, with an rotation axis directed parallel to the third axis Z.

In this case, this rotary cutting member is mounted on a mobile slide, configured in such a way as to allow it to be moved along an axis parallel to the first axis X.

This movement of the rotary cutting member can be performed manually, or managed automatically by the control unit through special members actuators for the relative handling.

To carry out the aforementioned rectification, the rotary cutting member is first arranged in a position adjacent to the first lateral edge 4a of the conveyor belt 3, and then the rotary cutting member and the conveyor belt 3 are activated, which, by moving according to the advancement direction of A, will cause the rotary cutting member to progressively remove material from the relative first lateral edge 4a until it is completely straight.

To obtain the advancement, according to a perfectly rectilinear direction (i.e. the advancement direction A), of the panels or other pieces transported by the conveyor belt 3, the machine 1 operates according to the methods described below.

Preliminarily, the aforementioned control unit of the machine 1 detects the actual shape and position of the first lateral edge 4a of the conveyor belt 3, bringing the latter into contact with the feeler device 11 by means of the above-mentioned movement means and activating the same feeler device 11.

Once the feeler device 11 has performed this detection and transmitted the data relating to the exact shape and exact position of said first lateral edge 4a to the control unit, the latter commands the activation of the grinding member 13, so that this performs the rectification of the first lateral edge 4a on the basis of such data.

As a result of this rectification, by means of the feeler device 11, the control unit detects the shape and position of the first lateral edge 4a of the conveyor belt 3 thus rectified, bringing the latter into contact with the same device feeler 11 by means of the aforementioned handling means.

Once this second detection has also been carried out, the feeler device 11 transmits the data relating to the shape and position of the first rectified lateral edge 4a to the same control unit, which will subsequently control the correct positioning of the conveyor belt 3 along the first axis X, by means of the aforementioned movement means, on the basis of said data relating to the first rectified lateral edge 4a.

In this case, the positioning of the conveyor belt 3 along the first axis X is extremely precise, since it is performed by taking as a reference a part of the conveyor belt 3, which is perfectly straight and parallel to the second axis Y, which is precisely the first side edge 4a. following the related amendment.

In this way, during the operation of the conveyor belt 3, the panels or other pieces transported by it will move following a rectilinear trajectory R parallel to the second axis Y, instead of along a sinusoidal trajectory T as normally occurs in traditional machines of this kind.

Following the execution of these preliminary steps for the correct positioning of the conveyor belt 3 along the first axis X, it will be possible to start the operating functions of the machine 1 by arranging one or more panels or other pieces on the conveyor belt 3 to allow execution, on them, of the machining and/or operations foreseen by the work program during the relative transport by the same conveyor belt 3.

As can be seen from the above description, the machine 1 according to the present invention allows obtaining quality standards higher than those obtainable through traditional passage machines equipped with conveyor belt for handling the pieces to be treated.

This advantage has an even greater importance in cases where it is necessary to machine high length pieces; in these situations, in fact, any positioning errors of the pieces could lead to important dimensional deviations with respect to the theoretical shape desired for these pieces.

The same machine 1 also allows to significantly reduce the number of machined pieces to be rejected due to defective machining.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (1) for executing at least one operation or machining operation on at least one panel or other piece, said machine (1) comprising:
a conveyor belt (4) for conveying at least one panel or other piece according to an advancing direction (A); at least one side edge (4a) being defined in said conveyor belt (4);
transversal movement means (14, 15) for moving said conveyor belt (4) transversely to said advancing direction (A);
detecting means (11) for detecting at least the position of said at least one side edge (4a) of said conveyor belt (4);
grinding means (13) for grinding said at least one side edge (4a) of said conveyor belt (4);
operative means for executing at least one operation or machining operation on at least one panel or other piece while said at least one panel or other piece is transported by said conveyor belt (4); and
a control unit which is operatively connected with said transversal movement means (14, 15) and said detecting means (11) and configured to command said transversal movement means (14, 15) to move said conveyor belt (4) transversely to said advancing direction (A) based on the position of said at least one side edge (4a) being grinded by said grinding means (13), said position being detected by said detecting means (11).

2. Machine (1) according to claim 1, **characterized in that** said detecting means (11) are configured to detect also the shape of said at least one side edge (4a) of said conveyor belt (4).

3. Machine (1) according to claim 1 or 2, **characterized in that** said detecting means comprise a feeler device (11).

4. Machine (1) according to any one of preceding claims, **characterized in that** said detecting means (11) are placed in a fixed position relative to said conveyor belt (4).

5. Machine (1) according to any one of preceding claims, **characterized in that** said grinding means (13) are of a rotative type.

6. Machine (1) according to claim 5, **characterized in that** said grinding means (13) comprise a milling cutter.

7. Machine (1) according to any one of preceding claims, **characterized in that** said detecting means (11) and said grinding means (13) are placed at the same branch of said conveyor belt (4).

8. Machine (1) according to any one of preceding claims, **characterized in that** said at least one side edge (4a) of said conveyor belt (4) lies, substantially, on a predetermined plane which is substantially parallel to said advancing direction (A) and substantially orthogonal to the plane on which said at least one panel or other piece lies when said at least one panel or other piece is transported by said conveyor belt (4).

9. Machine (1) according to any one of preceding claims, **characterized in that** said operative means comprise at least one sanding member.

10. Machine (1) according to any one of preceding claims, **characterized in that** said transversal movement means (14, 15) comprise a predetermined roller (14), on which said conveyor belt (4) is at least partially wound, and actuating means (15) for activating said predetermined roller (14).

11. Machine (1) according to claim 10, **characterized in that** said actuating means are configured to rotate said predetermined roller (14) on a plane (X-Y) which is parallel to the transporting plane defined by said conveyor belt (4).

12. Machine (1) according to claim 10 or 11, **characterized in that** said conveyor belt (4) is wound between a first roller (5) and a second roller (6) which are placed at opposite ends of said conveyor belt (4), and **in that** said predetermined roller (14) coincides with said first roller (14) or said second roller (6).

13. Method for processing at least one panel or other piece by a machine (1) according to any one of preceding claims while said conveyor belt (4) transports said at least one panel or other piece, said method comprising the steps of:
placing at least one panel or other piece on said conveyor belt (4) and making said conveyor belt (4) advance according to said advancing direction (A);
grinding said at least one side edge (4a) of said conveyor belt (4) by said grinding means (13);
detecting, by said detecting means (11), at least the position of said at least one side edge (4a) of said conveyor belt (4) which is grinded by said grinding means (13);
moving said conveyor belt (4) transversely to said advancing direction (A) by said transversal movement means based on the position of said at least one side edge (4a) of said conveyor belt (4) which is grinded by said grinding means (13), the position being detected by said detecting means (11); and
executing, by said operative means, at least one operation or machining operation on said at least one panel or other piece while said at least one panel or other piece is transported by said conveyor belt (4).

14. Method according to claim 13, **characterized**
**in that** it comprises also the step of detecting the shape and position of said at least one side edge (4a) of said conveyor belt (4) before executing said step of grinding said at least one side edge (4a) of said conveyor belt (4); and
**in that** said step of grinding said at least one side edge (4a) of said conveyor belt (4) is executed based on said shape and said position of said at least one side edge (4a) of said conveyor belt (4) which are detected before said step of grinding.

## Patentansprüche

1. Maschine (1) zum Ausführen mindestens einer Operation oder eines Bearbeitungsvorgangs an mindestens einer Platte oder einem anderen Teil, wobei die Maschine (1) umfasst: ein Förderband (4) zum Transportieren mindestens einer Platte oder eines anderen Stücks in einer Vorschubrichtung (A); mindestens eine Seitenkante (4a) ist in dem Förderband (4) definiert; Querbewegungsmittel (14, 15) zum Bewegen des Förderbandes (4) quer zur Vorschubrichtung (A); Erfassungsmittel (11) zum Erfassen mindestens der Position der mindestens einen Seitenkante (4a) des Förderbandes (4); Schleifmittel (13) zum Schleifen der mindestens einen Seitenkante (4a) des Förderbandes (4); Betriebsmittel zum Ausführen mindestens eines Arbeits- oder Bearbeitungsvorgangs an mindestens einer Platte oder einem anderen Teil, während die mindestens eine Platte oder das andere Teil durch das Förderband (4) transportiert wird; und eine Steuereinheit, die betriebsmäßig mit den Querbewegungsmitteln (14, 15) und den Erfassungsmitteln (11) verbunden und so konfiguriert ist, dass sie den Querbewegungsmitteln (14, 15) befiehlt, das Förderband (4) quer zu der Vorschubrichtung (A) auf der Grundlage der Position der mindestens einen Seitenkante (4a), die von den Schleifmitteln (13) geschliffen wird, zu bewegen, wobei die Position von den Erfassungsmitteln (11) erfasst wird.

2. Maschine (1) nach Anspruch 1, **dadurch gekennzeichnet, dass** die Erfassungsmittel (11) so konfiguriert sind, dass sie auch die Form der mindestens einen Seitenkante (4a) des Förderbandes (4) erfassen.

3. Maschine (1) nach Anspruch 1 oder 2, **dadurch gekennzeichnet, dass** die Erfassungsmittel eine Tastereinrichtung (11) umfassen.

4. Maschine (1) nach einem der vorhergehenden Ansprüche, **dadurch gekennzeichnet, dass** die Erfassungsmittel (11) in einer festen Position relativ zu dem Förderband (4) angeordnet sind.

5. Maschine (1) nach einem der vorhergehenden Ansprüche, **dadurch gekennzeichnet, dass** die Schleifmittel (13) vom rotierenden Typ sind.

6. Maschine (1) nach Anspruch 5, **dadurch gekennzeichnet, dass** die Schleifmittel (13) einen Fräser umfassen.

7. Maschine (1) nach einem der vorhergehenden Ansprüche, **dadurch gekennzeichnet, dass** die Erfassungseinrichtung (11) und die Schleifeinrichtung (13) an derselben Abzweigung des Förderbandes (4) angeordnet sind.

8. Maschine (1) nach einem der vorhergehenden Ansprüche, **dadurch gekennzeichnet, dass** die mindestens eine Seitenkante (4a) des Förderbandes (4) im Wesentlichen auf einer vorbestimmten Ebene liegt, die im Wesentlichen parallel zu der Vorschubrichtung (A) und im Wesentlichen orthogonal zu der Ebene ist, auf der die mindestens eine Platte oder das mindestens eine andere Teil liegt, wenn die mindestens eine Platte oder das mindestens eine andere Teil durch das Förderband (4) transportiert wird.

9. Maschine (1) nach einem der vorhergehenden Ansprüche, **dadurch gekennzeichnet, dass** die Betriebsmittel mindestens ein Schleifelement umfassen.

10. Maschine (1) nach einem der vorhergehenden Ansprüche, **dadurch gekennzeichnet, dass** die Querbewegungsmittel (14, 15) eine vorbestimmte Rolle (14), auf die das Förderband (4) zumindest teilweise aufgewickelt ist, und Betätigungsmittel (15) zum Aktivieren der vorbestimmten Rolle (14) umfassen.

11. Maschine (1) nach Anspruch 10, **dadurch gekennzeichnet, dass** die Betätigungsmittel so konfiguriert sind, dass sie die vorbestimmte Rolle (14) in einer Ebene (X-Y) drehen, die parallel zu der durch das Förderband (4) definierten Transportebene ist.

12. Maschine (1) nach Anspruch 10 oder 11, **dadurch gekennzeichnet, dass** das Förderband (4) zwischen einer ersten Rolle (5) und einer zweiten Rolle (6) aufgewickelt ist, die an gegenüberliegenden Enden des Förderbandes (4) angeordnet sind, und dass die vorbestimmte Rolle (14) mit der ersten Rolle (14) oder der zweiten Rolle (6) zusammenfällt.

13. Verfahren zur Bearbeitung mindestens einer Platte oder eines anderen Teils durch eine Maschine (1) nach einem der vorhergehenden Ansprüche, während das Förderband (4) die mindestens eine Platte oder das andere Teil transportiert, wobei das Verfahren die folgenden Schritte umfasst: Auflegen von mindestens einer Platte oder einem anderen Teil auf das Förderband (4) und Vorwärtsbewegen des Förderbandes (4) gemäß der Vorschubrichtung (A); Schleifen der mindestens einen Seitenkante (4a) des Förderbandes (4) durch das Schleifmittel (13); Erfassen mindestens der Position der mindestens einen Seitenkante (4a) des Förderbandes (4), die durch die Schleifmittel (13) geschliffen wird, durch die Erfassungsmittel (11); Bewegen des Förderbandes (4) quer zur Vorschubrichtung (A) durch die Querbewegungseinrichtung basierend auf der Position der mindestens einen Seitenkante (4a) des Förderbandes (4), die durch die Schleifeinrichtung (13) geschliffen wird, wobei die Position durch die Erfassungseinrichtung (11) erfasst wird; und Ausführen mindestens einer Operation oder eines Bearbeitungsvorgangs an der mindestens eine Platte oder dem mindestens einen anderen Teil durch die Betriebsmittel, während die mindestens eine Platte oder das mindestens einen anderen Teil durch das Förderband (4) transportiert wird.

14. Verfahren nach Anspruch 13, **dadurch gekennzeichnet, dass** es auch den Schritt des Erfassens der Form und der Position der mindestens einen Seitenkante (4a) des Förderbandes (4) umfasst, bevor der Schritt des Schleifens der mindestens einen Seitenkante (4a) des Förderbandes (4) ausgeführt wird; und dass der Schritt des Schleifens der mindestens einen Seitenkante (4a) des Förderbandes (4) auf der Grundlage der Form und der Position der mindestens einen Seitenkante (4a) des Förderbandes (4) ausgeführt wird, die vor dem Schritt des Schleifens erfasst werden.

## Revendications

1. Machine (1) pour l'exécution d'au moins une opération ou d'un usinage sur au moins un panneau ou une autre pièce, ladite machine (1) comprenant: une bande transporteuse (4) pour transporter au moins un panneau ou une autre pièce selon une direction d'avancement (A); au moins un bord latéral (4a) étant défini dans ladite bande transporteuse (4); des moyens de déplacement transversal (14, 15) pour déplacer ladite bande transporteuse (4) transversalement à ladite direction d'avancement (A); des moyens de détection (11) pour détecter au moins la position dudit au moins un bord latéral (4a) de ladite bande transporteuse (4); des moyens de meulage (13) pour meuler ledit au moins un bord latéral (4a) de ladite bande transporteuse (4); des moyens opérationnels pour exécuter au moins une opération ou une opération d'usinage sur au moins un panneau ou une autre pièce pendant que ledit au moins un panneau ou une autre pièce est transporté par ladite bande transporteuse (4); et une unité de commande reliée de manière opérationnelle auxdits moyens de déplacement transversal (14, 15) et auxdits moyens de détection (11) et configurée pour commander auxdits moyens de déplacement transversal (14, 15) de déplacer ladite bande transporteuse (4) transversalement à ladite direction d'avancement (A) en fonction de la position dudit au moins un bord latéral (4a) en cours de meulage par lesdits moyens de meulage (13), ladite position étant détectée par lesdits moyens de détection (11).

2. Machine (1) selon la revendication 1, **caractérisée en ce que** lesdits moyens de détection (11) sont configurés pour détecter également la forme dudit au moins un bord latéral (4a) de ladite bande transporteuse (4).

3. Machine (1) selon la revendication 1 ou 2, **caractérisée en ce que** les moyens de détection comprennent un dispositif de palpage (11).

4. Machine (1) selon l'une quelconque des revendications précédentes, **caractérisée en ce que** lesdits moyens de détection (11) sont placés dans une position fixe par rapport à ladite bande transporteuse (4).

5. Machine (1) selon l'une quelconque des revendications précédentes, **caractérisée en ce que** lesdits moyens élastiques (13) sont de type rotatif.

6. Machine (1) selon la revendication 5, **caractérisée en ce que** les moyens de broyage (13) comprennent une fraise.

7. Machine (1) selon l'une quelconque des revendications précédentes, **caractérisée en ce que** lesdits moyens de détection (11) et lesdits moyens de broyage (13) sont placés à la même branche de ladite bande transporteuse (4).

8. Machine (1) selon l'une quelconque des revendications précédentes, **caractérisée en ce que** ledit au moins un bord latéral (4a) de ladite bande transporteuse (4) se trouve, sensiblement, sur un plan prédéterminé qui est sensiblement parallèle à ladite direction d'avancement (A) et sensiblement orthogonal au plan sur lequel se trouve ledit au moins un panneau ou autre pièce lorsque ledit au moins un panneau ou autre pièce est transporté par ladite bande transporteuse (4).

9. Machine (1) selon l'une quelconque des revendications précédentes, **caractérisée en ce que** lesdits moyens opérationnels comprennent au moins un organe de ponçage.

10. Machine (1) selon l'une quelconque des revendications précédentes, **caractérisée en ce que** lesdits moyens de déplacement transversal (14, 15) comprennent un rouleau prédéterminé (14), sur lequel s'enroule au moins partiellement ladite bande transporteuse (4), et des moyens d'actionnement (15) pour actionner ledit rouleau prédéterminé (14).

11. Machine (1) selon la revendication 10, **caractérisée en ce que** lesdits moyens d'actionnement sont configurés pour faire tourner ledit rouleau prédéterminé (14) sur un plan (X-Y) qui est parallèle au plan de transport défini par ladite bande transporteuse (4).

12. Machine (1) selon la revendication 10 ou 11, **caractérisée en ce que** ladite bande transporteuse (4) est enroulée entre un premier rouleau (5) et un second rouleau (6) qui sont placés aux extrémités opposées de ladite bande transporteuse (4), et **en ce que** ledit rouleau prédéterminé (14) coïncide avec ledit premier rouleau (14) ou ledit second rouleau (6).

13. Procédé de traitement d'au moins un panneau ou autre pièce par une machine (1) selon l'une quelconque des revendications précédentes pendant que ladite bande transporteuse (4) transporte ledit au moins un panneau ou autre pièce, ledit procédé comprenant les étapes suivantes: placer au moins un panneau ou une autre pièce sur ladite bande transporteuse (4) et faire avancer ladite bande transporteuse (4) selon ladite direction d'avancement (A); meuler ledit au moins un bord latéral (4a) de ladite bande transporteuse (4) par ledit moyen de meulage (13); détecter, par ledit moyen de détection (11), au moins la position dudit au moins un bord latéral (4a) de ladite bande transporteuse (4) qui est broyée par ledit moyen de broyage (13); déplacer ladite bande transporteuse (4) transversalement à ladite direction d'avancement (A) par ledit moyen de déplacement transversal en fonction de la position dudit au moins un bord latéral (4a) de ladite bande transporteuse (4) qui est broyé par ledit moyen de broyage (13), la position étant détectée par ledit moyen de détection (11); et exécuter, par lesdits moyens opérationnels, au moins une opération ou une opération d'usinage sur ledit au moins un panneau ou une autre pièce pendant que ledit au moins un panneau ou une autre pièce est transporté par ladite bande transporteuse (4).

14. Procédé selon la revendication 13, **caractérisé en ce que** il comprend également l'étape consistant à détecter la forme et la position dudit au moins un bord latéral (4a) de ladite bande transporteuse (4) avant d'exécuter ladite étape de meulage dudit au moins un bord latéral (4a) de ladite bande transporteuse (4); et en ce sens que ladite étape de meulage dudit au moins un bord latéral (4a) de ladite bande transporteuse (4) est exécutée sur la base de ladite forme et de ladite position dudit au moins un bord latéral (4a) de ladite bande transporteuse (4) qui sont détectées avant ladite étape de meulage.
